# EUROPÄISCHE PATENTSCHRIFT

(11) **EP 1 434 723 B1**
(45) Veröffentlichungstag und Bekanntmachung des Hinweises auf die Patenterteilung: **16.01.2008**
(21) Anmeldenummer: 02776677.3
(22) Anmeldetag: 18.09.2002
(51) Int. Cl.: B65D 85/67, B65D 21/02, G11B 23/02

(54) **VERPACKUNG FÜR EINE MAGNETSTREIFENROLLE**
PACKAGING FOR A REEL OF MAGNETIC TAPE
EMBALLAGE DESTINE A UNE BOBINE DE BANDE MAGNETIQUE

(30) Priorität: 10.10.2001 DE 10149979
(43) Veröffentlichungstag der Anmeldung: 07.07.2004
(73) Patentinhaber: Leonhard Kurz GmbH & Co. KG, 90763 Fürth (DE)
(72) Erfinder: Luber, Klaus, 92237 Sulzbach-Rosenberg (DE); Hopfensitz, Ralph, 90449 Nürnberg (DE)
(74) Vertreter: Zinsinger, Norbert
(86) Internationale Anmeldenummer: PCT/DE2002/003477
(87) Internationale Veröffentlichungsnummer: WO 2003/033379

(56) Entgegenhaltungen:
- EP-A- 0 069 672
- US-A- 4 120 398
- US-A- 4 944 398

## Beschreibung

Die Erfindung betrifft eine Verpackung für eine auf ein Kemelement aufgewickelte Magnetstreifenrolle gemäss dem Oberbegriff des Anspruches 1.

Bislang werden Magnetstreifenrollen beispielsweise in eine Kunststoffolie eingeschweisst. Anschliessend wird die Kunststoffolie jedoch wieder durchstochen, indem die Magnetstreifenrolle mit ihrem Kemelement auf einen Schneiddom aufgesteckt wird. Die solchermassen präparierte Magnetstreifenrolle mit wieder geöffneter Kunststoffolie wird dann auf einen in einem Verpackungskarton befindlichen Kemdom aufgesteckt, der ebenfalls aus einem Kartonmaterial besteht. Zwischen benachbarten, auf den Kemdom aufgesteckten Magnetstreifenrollen wird jeweils ein Zwischenlageelement angeordnet, das beispielsweise aus einem Kunststoffschaummaterial besteht. Bei dieser bekannten Verpackung sind die Magnetstreifenrollen also infolge der wieder geöffneten Kunststoffolie nur sehr bedingt gegen Staub geschützt, was sich als mangelhaft erwiesen hat. Eine solche Verpackung aus einem Kartonmaterial ist ausserdem feuchtigkeitsempfindlich, was sich insbesondere beim Transport auf See als mangelhaft erwiesen hat. Ein weiterer Mangel einer solchen Kartonverpackung besteht in der vergleichsweise geringen Stabilität. Daraus können unerwünschte Verschiebungen bzw. Verlagerungen einzelner Streifenlagen einer Magnetstreifenrolle resultieren.

Der Magnetstreifen einer solchen Magnetstreifenrolle kann beispielsweise eine Breite von 6,35 mm oder eine Breite von 12,7 mm besitzen. Selbstverständlich sind auch andere Breitendimensionen möglich. Der Aussendurchmesser einer Magnetstreifenrolle kann beispielsweise ca. 300 mm betragen, was bedeutet, dass eine Magnetstreifenrolle eine Gesamtlänge des Magnetstreifens von 4000 m und mehr besitzen kann.

Eine Verpackung der eingangs genannten Art ist aus der US 3 685 646 A bekannt. Bei dieser bekannten Verpackung ist das jeweilige Wannenelement mit einem kreisrunden Boden ausgebildet, an den oberseitig vier Ecklaschen anschliessen, so dass sich insgesamt jeweils ein Wannenelement mit einer quadratischen Grundfläche ergibt. Die Stapelansätze sind bei diesem bekannten Wannenelement in der Nachbarschaft des zentralen Zentrieransatzes als Vertiefungen ausgebildet. Die Stapelansätze liegen auf dem Kemelement der unter dem jeweiligen Wannenelement befindlichen, zu verpackenden Magnetstreifenrolle auf. Auf diese Weise ergibt sich zwischen den Wannenelementen und den zwischen diesen angeordneten Magnetsreifenrollen im verpackten Zustand eine Pressung, die im Extremfall zu Beschädigungen führen kann.

Eine Verpackung der eingangs genannten Art ist auch aus der gattungsgemäßen US 4 120 398 A bekannt. Bei dieser bekannten Verpackung ist das jeweilige Wannenelement mit Stapelansätzen ausgebildet, die in den Eckenbereichen des quadratischen Bodens des Wannenelementes als Einsenkungen ausgebildet sind. Der Boden des jeweiligen Wannenelementes ist mit Erhebungen ausgebildet, auf welchen die zugehörige Magnetstreifenrolle aufliegt. Auch bei dieser bekannten Verpackung sind die Magnetstreifenrollen zwischen zugehörigen Wannenelementen direkt und unmittelbar formschlüssig festgelegt, woraus Beschädigungen resultieren können.

Aus der CH 623 952 A5 ist eine aus Kunststoff bestehende stapelbare Palette bekannt, die zur Archivierung von auf verschiedenartigen flanschlosen Wickelkernen gespulten Magnetbändern dient. Die Palette weist eine in die Achsmitte hochgezogene Nabe mit einer zentrischen Bohrung auf. Die Palette ist insbesondere für den Versand von auf flanschlosen Kernen aufgewickelten Magnetbändern grösseren Durchmessers geeignet und so geformt, dass sie verschiedene Arten von Wickelkernen aufnehmen kann. Ein paar solcher Paletten werden zur Abdeckung der äusseren Bandwinkel einer Anzahl von unmittelbar übereinander gereihten, auf stapelbaren Kernen aufgewickelte Magnetbändern mit einer in der Wärme schrumpfbaren Folie umschlossen. Hier liegen die Magnetstreifenrollen also überhaupt direkt und unmittelbar aufeinander gestapelt aneinander an. Wird eine Magnetstreifenrolle benötigt, so muss der gesamte Stapel geöffnet werden.

Der Erfindung liegt die Aufgabe zugrunde, eine Verpackung der eingangs genannten Art zu schaffen, bei welcher Verschiebungen einzelner Magnetstreifenlagen der Magnetstreifenrolle vermieden werden, ein vollkommener Staubschutz der Magnetstreifenrolle erreicht wird, und Transportschäden zuverlässig verhindert werden.

Diese Aufgabe wird bei einer Verpackung der eingangs genannten Art erfindungsgemäss durch die Merkmale des Patentanspruches 1 gelöst.

Eine Anzahl jeweils in eine Kunststofffolie eingeschweisste Wannenelemente mit Magnetstreifenrollen können in einer Transport-Umverpackung angeordnet sein.

Das Wannenelement ist einfach und preisgünstig herstellbar. Es weist nur eine geringe Wanddicke auf, so dass ihr Eigengewicht minimal ist. Das Wannenelement weist eine derartige mechanische Festigkeit und Formstabilität auf, dass Transportschäden der zugehörigen Magnetstreifenrolle zuverlässig ausgeschlossen sind. Der vom Boden nach oben stehende zentrale Zentrieransatz für das Kemelement der Magnetstreifenrolle weist eine axiale Abmessung, d.h. Höhe auf, die an die axiale Abmessung des Kernelementes angepasst ist, wobei die Magnetstreifenrolle eine dem Kernelement entsprechende Breitenabmessung besitzt bzw. nur geringstfügig kleiner als diese ist.

Aufeinandergestapelte, jeweils mit einer Magnetstreifenrolle bestückte Wannenelemente liegen mit ihren Stapelansätzen aufeinander, wobei übereinandergestapelte Magnetstreifenrollen voneinander definiert beabstandet, d.h. getrennt, sind. Durch die formstabilen Wannenelemente sind Verschiebungen einzelner Magnetstreifenlagen der Magnetstreifenrollen zuverlässig ausgeschlossen.

Dadurch, dass erfindungsgemäss vom Aussenrand des Bodens eine umlaufende Wand nach oben steht, ergibt sich ein guter Schutz der jeweiligen Magnetstreifenrolle. Die umlaufende Wand ist derartig dimensioniert, dass die Stapelansätze definiert über die umlaufende Wand überstehen, so dass bei aufeinandergestapelten Wannenelementen die Wände der übereinandergestapelten Wannenelemente sich berühren. Auf diese Weise wird ein Schutz der übereinandergestapelten Magnetstreifenrollen gegen Einwirkungen von aussen erreicht.

Zum Schutz und zur optimalen Lagerung der jeweiligen Magnetstreifenrolle dient das zwischen dem Boden des Wannenelementes und der Magnetstreifenrolle vorgesehene Zwischenlageelement. Dieses Zwischenlageelement besteht zweckmässigerweise aus einem geeigneten Kunststoffschaummaterial. Hierbei kann es sich um einen PU-Schaum handeln. Das Zwischenlageelement ist mit einem dem zentralen Zentrieransatz des Wannenelementes entsprechenden Loch ausgebildet.

Demselben Zwecke, d.h. dem weiter verbesserten Schutz der jeweiligen Magnetstreifenrolle, dient ausserdem das auf der im Wannenelement angeordneten Magnetstreifenrolle angeordnete zweite Zwischenlageelement. Dieses zweite Zwischenlageelement ist vorzugsweise gleich ausgebildet wie das oben erwähnte bodenseitige erste Zwischenlageelement, um die Lagerhaltung entsprechend zu vereinfachen.

Erfindungsgemäss ist das mit der Magnetstreifenrolle und den Zwischenlageelementen bestückte Wannenelement abgedichtet in eine Kunststoffolie eingeschweisst, wodurch ein zuverlässiger Staubschutz der Magnetstreifenrolle bewirkt wird. Ein solcher zuverlässiger Staubschutz ist bei Magnetstreifenrollen von grösster Wichtigkeit, um die Funktionseigenschaften des Magnetstreifens zu erfüllen, d.h. nicht ungewollt zu beeinträchtigen. Bei der zur Anwendung gelangenden Kunststoffolie handelt es sich beispielsweise um eine PE-Folie.

Eine Anzahl in eine Kunststoffolie eingeschweisste Magnetstreifenrollen, d.h. eine Anzahl erfindungsgemässer Verpackungen mit Magnetstreifenrollen, sind zweckmässigerweise in einer Transport-Umverpackung angeordnet. Bei dieser Transport-Umverpackung handelt es sich beispielsweise um eine Umverpackung aus einem Kartonmaterial. Eine entsprechende Anzahl Karton-Umverpackungen können dann ausserdem noch in einer Containerverpackung angeordnet werden, die beispielsweise ein Volumen in der Grössenordnung von 1 m³ besitzen kann. Weitere Einzelheiten, Merkmale und Vorteile ergeben sich aus der nachfolgenden Beschreibung eines in der Zeichnung dargestellten Ausführungsbeispieles der erfindungsgemässen Verpackung. Es zeigen:
- Figur 1: eine Ansicht der Verpackung in Blickrichtung von oben, wobei das Wannenelement und die im Wannenelement positionierte Magnetstreifenrolle verdeutlicht sind, und
- Figur 2: einen Schnitt entlang der Schnittlinie II-II in Figur 1 durch das Wannenelement, wobei die Magnetstreifenrolle nicht dargestellt aber die das Wannenelement mit der nicht gezeichneten Magnetstreifenrolle vollkommen einschliessende Kunststoffolie verdeutlicht ist.

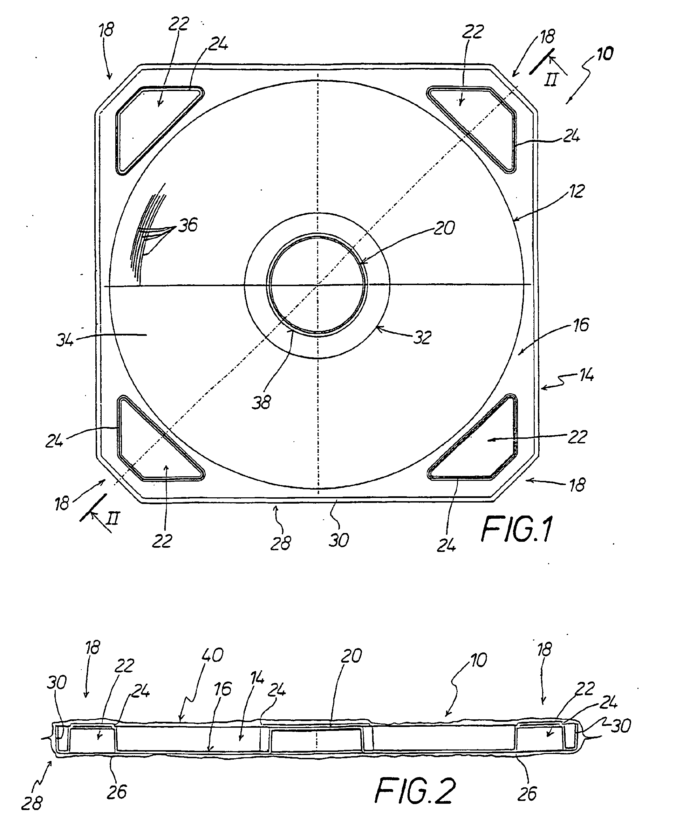

Figur 1 zeigt eine Verpackung 10 für eine Magnetstreifenrolle 12. Die Verpackung 10 weist ein Wannenelement 14 mit einem Boden 16 auf. Der Boden 16 besitzt eine quadratische Grundfläche mit abgeschrägten Ecken 18.

Wie auch aus Figur 2 ersichtlich ist, stehen vom Boden 16 ein zentraler Zentrieransatz 20 und vom Zentrieransatz 20 radial gleich weit entfernte Stapelansätze 22 in die gleiche Richtung nach oben.

Bei dem in Figur 1 gezeichneten Ausführungsbeispiel weisen die Stapelansätze 22 eine trapezförmige Umfangsrandkontur auf. Selbstverständlich können die Stapelansätze 22 auch eine andere Randkontur besitzen.

Jeder Stapelansatz 22 weist oberseitig eine umlaufende Positionierfläche 24 und eine dieser entsprechende, unterseitig umlaufende Auflagerfläche 26 auf. Im aufeinandergestapelten Zustand benachbarter Verpackungen 10 liegen die unterseitigen Auflagerflächen 26 passgenau an den oberseitigen Positionierflächen 24 an, so dass benachbarte Verpackungen 10 bzw. Wannenelemente 14 der Verpackungen 10 gegen seitliche Verschiebungen gesichert sind.

Vom Aussenrand 28 des Bodens 16 des Wannenelementes 14 steht eine umlaufende Wand 30 nach oben. Die Wand 30 besitzt eine Höhendimension, die der Höhendimension der Stapelansätze 22 zwischen der Auflagerfläche 26 und der Positionierfläche 24 entspricht, so dass die Wände 30 aufeinandergestapelter Wannenelemente 14 aneinander anliegen. Die Stapelansätze 22 stehen über die umlaufende Wand 30 geringfügig über, wie die Figur 2 verdeutlicht.

Die Magnetstreifenrolle 12 besteht aus einem auf ein ringförmiges Kemelement 32 aufwickelten Magnetstreifen, der nur durch einige kurze und voneinander geringfügig beabstandete Linien 36 (sh. Figur 1) verdeutlicht ist. Das Kemelement 32 weist ein zentrales Loch 38 auf, dessen Durchmesser an den Durchmesser des zentralen Zentrieransatzes 20 des Wannenelementes 14 angepasst ist, so dass die Magnetstreifenrolle 12 im Wannenelement 14 am zentralen Zentrieransatz 20 spielfrei gelagert wird.

Vor dem Anordnen der Magnetstreifenrolle 12 im Wannenelement 14 wird in diesem ein (nicht gezeichnetes) Zwischenlageelement aus einem Kunststoffschaummaterial angeordnet. Nach dem Anbringen dieses Zwischenlageelementes auf dem Boden 16 wird im Wannenelement 14 die Magnetstreifenrolle 12 angeordnet. Anschliessend wird auf der im Wannenelement positionierten Magnetstreifenrolle 12 ein zweites Zwischenlageelement angeordnet, das ebenfalls nicht zeichnerisch dargestellt ist. Danach wird das mit der Magnetstreifenrolle 12 und den nicht gezeichneten Zwischenlageelementen bestückte Wannenelement 14 in eine Kunststoffolie 40 (sh. Figur 2) dicht eingeschweisst. Die solchermassen produzierten Verpackungen 10 werden eng übereinandergestapelt. Ein Stapel aus einer Anzahl solcher Magnetstreifen-Verpackungen 10 wird dann in einer Transport-Umverpackung aus einem Kartonmaterial angeordnet und zum Versand bereitgestellt. Eine Anzahl solcher Transport-Umverpackungen kann dann beispielsweise in einem Transport-Container angeordnet und transportiert werden.

## Patentansprüche

1. Verpackung für eine auf ein Kernelement (32) aufgewickelte Magnetstreifenrolle (12), mit einem Wannenelement (14) mit einem Boden (16), von dem ein zentraler Zentrieransatz (20) zum zentrierten Festlegen des Kernelementes (32) der Magnetstreifenrolle wegsteht(12), wobei vom Zentrieransatz (20) radial gleich weit entfernte Stapelansätze (22) zum Aufeinanderstapeln von Wannenelementen (14) vorgesehen sind, vom Aussenrand (28) des Bodens (16) umlaufend eine Wand (30) nach oben steht und die Stapelansätze (22) in den Eckenbereichen (18) vom Boden (16) des Wannenelementes (14) in die gleiche Richtung wegstehen,
**dadurch gekennzeichnet,**
das die Stapelansätze (22) in die gleiche Richtung wie der Zentrieransatz (20) nach oben stehen, dass der Boden (16) des Wannenelementes (14) quadratisch ausgebildet ist, dass zwischen dem Boden (16) und der Magnetstreifenrolle (12) ein Zwischenlageelement angeordnet ist, dass auf der im Wannenelement (14) angeordneten Magnetstreifenrolle (12) ein zweites Zwischenlageelement angeordnet ist, und dass das mit der Magnetstreifenrolle (12) und den Zwischenlageelementen bestückte Wannenelement (14) in eine Kunststofffolie (40) eingeschweisst ist.

2. Verpackung nach Anspruch 1,
**dadurch gekennzeichnet,**
**dass** eine Anzahl jeweils in eine Kunststoffolie (40) eingeschweisste Wannenelemente (14) mit Magnetstreifenrollen (12) in einer Transport-Umverpackung angeordnet sind.

## Claims

1. Package for a magnetic strip reel (12) which is wound on a core element (32) and has a trough element (14) with a base (16) from which a central centring attachment (20) projects (12) for centred fixing of the core element (32) of the magnetic strip reel, with stack attachments (22) which are radially at the same distance from the centring attachment (20) being provided for stacking trough elements (14) one on top of the other, and with a wall (30) projecting upwards circumferentially from the outer edge (28) of the base (16), and with the stack attachments (22) projecting in the same direction from the base (16) of the trough element (14) in the corner areas (18),
**characterized**
**in that** the stack attachments (22) project upwards in the same direction as the centring attachment (20), in that the base (16) of the trough element (14) is square, in that an intermediate layer element is arranged between the base (16) and the magnetic strip reels (12), in that a second intermediate layer element is arranged on the magnetic strip reel (12) that is arranged in the trough element (14), and in that the trough element (14), which is fitted with the magnetic strip reel (12) and the intermediate layer elements, is welded into a plastic film (40).

2. Package according to Claim 1,
**characterized**
**in that** a number of trough elements (14) which are in each case welded into a plastic film (40) and have magnetic strip reels (12) are arranged in a surrounding transport package.

## Revendications

1. Emballage pour une bobine de bande magnétique (12) enroulée sur un élément noyau (32), comprenant un élément de cuvette (14) doté d'un fond (16) dont dépasse un plot de centrage central (20) destiné à fixer de manière centrée l'élément de noyau (32) de la bobine de bande magnétique (12), des plots d'empilement (22) éloignés radialement de la même distance du plot de centrage (20) étant prévus pour superposer les éléments de cuvette (14), une paroi (30) dépassant de manière circulaire vers le haut du bord extérieur (28) du fond (16) et les plots d'empilement (22) dépassant dans les zones de coin (18) du fond (16) de l'élément de cuvette (14) dans la même direction,
**caractérisé en ce que**
les plots d'empilement (22) dépassent vers le haut dans la même direction que le plot de centrage (20), **en ce que** le fond (16) de l'élément de cuvette (14) est conçu de manière carrée, **en ce qu'**un élément d'isolation est disposé entre le fond (16) et la bobine de bande magnétique (12), **en ce qu'**un second élément d'isolation est disposé sur la bobine de bande magnétique (12) disposée dans l'élément de cuvette (14), et **en ce que** l'élément de cuvette (14) équipé de la bobine de bande magnétique (12) et des éléments d'isolation est soudé dans une feuille de matière plastique (40).

2. Emballage selon la revendication 1,
**caractérisé en ce que**
un nombre d'éléments de cuvette (14) respectivement soudés dans une feuille de matière plastique (40) sont disposés avec les bobines de bande magnétique (12) dans un emballage secondaire de transport.
